# EUROPÄISCHE PATENTSCHRIFT

(11) **EP 0 915 764 B1**
(45) Veröffentlichungstag und Bekanntmachung des Hinweises auf die Patenterteilung: **04.07.2001**
(21) Anmeldenummer: 97935529.4
(22) Anmeldetag: 18.07.1997
(51) Int. Cl.: B60C 23/04

(54) **VERFAHREN ZUM VERARBEITEN VON SIGNALEN EINES REIFENDRUCKÜBERWACHUNGSSYSTEMS**
PROCESS FOR EVALUATING THE SIGNALS FROM A TYRE PRESSURE MONITORING SYSTEM
PROCEDE POUR LE TRAITEMENT DES SIGNAUX D'UN SYSTEME DE SURVEILLANCE DE LA PRESSION DES PNEUS

(30) Priorität: 07.08.1996 DE 19631783
(43) Veröffentlichungstag der Anmeldung: 19.05.1999
(73) Patentinhaber: Beru AG, 71636 Ludwigsburg (DE)
(72) Erfinder: NORMANN, Norbert, D-75223 Niefern-Öschelbronn (DE); SCHULZE, Gunter, Lothar, D-75228 Ispringen (DE); KESSLER, Ralf, D-76327 Pfinztal (DE); KÜHNLE, Andreas, D-75438 Knittlingen (DE)
(74) Vertreter: Twelmeier, Ulrich, Dipl. Phys.
(86) Internationale Anmeldenummer: EP9703848
(87) Internationale Veröffentlichungsnummer: WO9805518

(56) Entgegenhaltungen:
- EP-A- 0 763 437
- WO-A-94/20317
- DE-A- 19 608 478
- US-A- 5 612 671

## Beschreibung

Die Erfindung geht aus von einem Verfahren mit den im Oberbegriff des Anspruchs 1 angegebenen Merkmalen. Ein solches Verfahren ist aus der WO 93/16891 bekannt und arbeitet mit einer am jeweiligen Rad angebrachten "Radelektronik", welche einen Druckmeßfühler, eine Schaltung zur Verarbeitung des Druckmeßsignals, einen Sender mit Sendeantenne und eine Batterie enthält, in Kombination mit den Rädern zugeordneten Empfangsantennen, welche mit einem gemeinsamen "Steuergerät" in der Karosserie verbunden sind, welche einen gemeinsamen Empfänger für die Empfangsantennen, eine Auswerteschaltung und eine Anzeigeeinheit enthält. Damit das Steuergerät die empfangenen Signale den jeweiligen Rädern des Fahrzeuges eindeutig zuordnen kann, versieht jede Radeleketronik die von ihr ausgesandten Signale mit einer individuellen Kennung (Identifikationssignal). Die Radelektroniken erzeugen zu diesem Zweck in vier Abschnitte unterteilte Signale, bestehend aus einer Präambel (Synchronisationsteil des Signals), aus dem Identifikationssignal (Kennung) insbesondere in Gestalt einer Identifikationsnummer, aus einem Meßsignal, welches Auskunft über den gemessenen Reifendruck gibt; und aus einer das Ende des Signals bildenden Postambel (CRC-Signal). Um anhand des Identifikationssignales erkennen zu können, von welchem Rad ein Signal kommt, wird gemäß der WO 93/16891 zunächst eine Initialisierung durchgeführt, in deren Verlauf das jeweilige Identifikationssignal, verknüpft mit der jeweiligen Radposition, im Steuergerät abgespeichert wird. Um diese Initialisierung durchzuführen, muß das Reifendrucküberwachungssystem in einen sogenannten Paarungsmodus geschaltet und dann der Reihe nach jeder einzelne Sender einmal aktiviert werden. Danach wird das System wieder in seinen Meßmodus gebracht, bis sich die Senderpositionen infolge eines Radwechsels ändern. Das heißt, daß bei jedem Radwechsel eine entsprechend eingewiesene Person die Initialisierung durchführen muß. Radwechsel in einer beliebigen Werkstatt oder zuhause sind dadurch unter Umständen nicht oder nur auf Kosten der Sicherheit möglich. Die einwandfreie Funktion des Reifendrucküberwachungssystems kann aufgrund möglicher Bedienungsfehler nicht gewährleistet werden.

In der WO 93/08036 wird das Problem umgangen, indem die Informationen der Druckmeßfühler und der daran angeschlossenen Sendeelektronik nicht mit Hilfe des im Fahrzeug vorgesehenen zentralen Steuergerätes registriert werden, sondern mit Hilfe eines Fernbedienungselementes, welches eine LCD-Anzeigeeinrichtung hat, die das Ablesen des Reifendruckes ermöglicht. Will man den Reifendruck erfahren, so muß man an jedem einzelnen Rad die gewünschte Information mit Hilfe des Fembedienungselementes erfragen. Das bekannte Verfahren bietet zwar den Vorteil einer eindeutigen Zuordnung der Meßwerte, ermöglicht jedoch keine Kontrolle des Reifendrucks während der Fahrt.

Die ältere, aber nicht vorveröffentlichte EP 0 763 437 A1 offenbart bereits eine Schaltungsanordnung in einem System zur Reifendrucküberwachung an Fahrzeugen mit an den Rädern angebrachten Radelektroniken mit jeweils einem Drucksensor, einer Schaltung zur Verarbeitung des von diesem gelieferten Druckmeßwertes und einem Sender, mit in der Nähe der Räder an der Karosserie angebrachten Empfangsantennen und mit einem in der Karosserie angeordneten Steuergerät, mit welchem alle Empfangsantennen verbunden sind, wobei das Steuergerät eine Kombination aus einem Empfänger und einem ihm vorgeschalteten Multiplexer enthält, welcher für jede der Empfangsantennen einen eigenen Eingang hat und in welchem die Eingänge einzeln abschaltbar und auf einen gemeinsamen Eingang des Empfängers geschaltet sind. Diese Schaltungsanordnung ermöglicht ein vom Gegenstand der vorliegenden Erfindung verschiedenes Verfahren, um festzustellen, über welche Empfangsantenne ein ankommendes Signal mit der größten Intensität empfangen wird.

Der vorliegenden Erfindung liegt die **Aufgabe** zugrunde, ein Verfahren anzugeben, wie bei einem telemetrisch arbeitenden Reifendrucküberwachungssystem der Reifendruck von jedem Rad des Fahrzeuges signalisiert und von einem zentralen Steuergerät automatisch dem richtigen Rad zugeordnet werden kann.

Diese Aufgabe wird gelöst durch ein Verfahren mit den im Anspruch 1 angegebenen Merkmalen. Vorteilhafte Weiterbildungen der Erfindung sind Gegenstand der abhängigen Ansprüche.

Wenn eine Radelektronik ein Signal mit einem Datentelegramm aussendet, dann kann dieses von allen Empfangsantennen gleichzeitig aufgefangen und an den Empfänger im zentralen Steuergerät des Reifendrucküberwachungssystems weitergeleitet werden. Erfindungsgemäß werden die über die verschiedenen Empfangsantennen hereinkommenden Signale nicht einzeln, sondern gemeinschaftlich verarbeitet und zum Zwecke der Zuordnung zu einem bestimmten Rad auf die Signalintensität untersucht. Zu diesem Zweck werden die über die verschiedenen Empfangsantennen hereinkommenden Signale summiert und als Summe dem Empfänger zugeführt und es wird die Intensität des Summensignals bestimmt und verglichen mit der Intensität eines Summensignals, welches dadurch gebildet wird, daß nicht alle N Empfangsantennen, sondern zeitweise nur N-1 Empfangsantennen auf den Eingang des Empfängers geschaltet werden. Dabei wird die Empfangsantenne, welche vom Eingang des Empfängers getrennt wird, zyklisch ausgetauscht, so daß jede der Empfangsantennen in einem Verfahrenszyklus einmal vom Empfänger getrennt wird. Die Antenne, deren Abschalten den größten Intensitätsverlust im Summensignal zur Folge hat, ist im Normalfall jene Antenne, welche der sendenden Radelektronik am nächsten liegt und deshalb das Signal mit der größten Feldstärke empfängt. Die Empfangsantenne, deren Abschalten den größten Intensitätsverlust zur Folge hat, wird deshalb der sendenden Radelektronik und damit jenem Rad zugeordnet, an welchem die Radelektronik angebracht ist, vorzugsweise aber nur dann, wenn der Intensitätsverlust einen bestimmten Mindestwert überschreitet; dadurch wird sichergestellt, daß Abschirmeffekte infolge einer ungünstigen Position der Radelektronik in Bezug auf die ihr nächstliegende Empfangsantenne nicht dazu führen, daß fälschlicherweise eine der anderen Empfangsantennen der sendenden Radelektronik zugeordnet wird, sie empfängt ja nur deshalb das stärkste Signal, weil die tatsächlich nächstliegende Empfangsantenne durch die ungünstige Stellung der sendenden Radelektronik augenblicklich abgeschirmt ist.

Die Erfindung hat aber nicht nur den Vorteil einer hohen Zuordnungssicherheit, sondern auch den Vorteil einer hohen Auswertesicherheit. Dadurch, daß der Empfänger im zentralen Auswertegerät die Signale von den Empfangsantennen nicht einzeln, sondern summiert empfängt und verarbeitet, ist die von ihm empfangene Feldstärke höher als im Falle einer einzelnen Antenne. Sollte zu irgendeinem Zeitpunkt die von einer Empfangsantenne empfangene Feldstärke für den angeschlossenen Empfänger zu gering sein, so daß es zu einem Signalausfall kommen würde, dann verbessert sich die Situation erfindungsgemäß dadurch, daß alle Empfangsantennen zugleich ihren Beitrag zum Eingangssignal für den Empfänger liefern. Insbesondere gilt dies für den Fall, daß die der sendenden Radelektronik nächstliegende Empfangsantenne wegen einer ungünstigen Radstellung im Funkschatten liegt und deshalb die empfangene Feldstärke wesentlich abfällt. Diese Gefahr besteht insbesondere bei höheren Geschwindigkeiten des Fahrzeuges, weil dann mit schneller werdender Raddrehung die Möglichkeit zunimmt, daß die Radelektronik während des Aussendens ihres Datentelegramms zumindest zeitweise in eine ungünstige Position gedreht wird. Trotz der ursächlich mit der Raddrehung verknüpften Schwankungen der Signalfeldstärke reicht es bei Anwendung der Erfindung für einen sicheren Datenempfang aus, wenn nur an einigen der Empfangsantennen ein genügend starkes Signal empfangen wird.

Kennt das zentrale Auswertegerät bereits die richtige Zuordnung der Kennungen zu den Rädern, dann muß für die Auswertung der Datentelegramme in der Summe der empfangenen Signale keiner der Antennenkanäle mehr ausgeblendet werden; letzteres ist jedoch erforderlich, wenn die Zuordnung erstmals ermittelt werden muß. Danach genügt es, in zeitlichen Abständen T_{E}, die groß sein dürfen gegen die Periode Tₛ, in welcher die Radelektroniken ihrer Datentelegramme senden, die Zuordnung der Kennungen zu den Rädern erneut zu überprüfen, um automatisch erkennen zu können, ob und wann sich z.B. durch einen Radwechsel die Zuordnung geändert hat. So ist es zum Beispiel möglich, bei jedem Start eines Fahrzeugs zunächst ein Verfahren nach Anspruch 1 ablaufen zu lassen, um die Zuordnung der Kennungen zu den Rädern zu ermitteln, danach aber bis zum Stillsetzen des Fahrzeugs keine Antennenkanäle mehr auszublenden, sondern die Signale aller N Räder dem Empfänger zuzuführen, wodurch eine maximale Empfangsfeldstärke erzielbar ist.

Die Wahrscheinlichkeit, daß einzelne Daten oder gar komplette Signale am Empfänger ausfallen ist, bei Anwendung der Erfindung deshalb außerordentlich gering.

Zur Durchführung des erfindungsgemäßen Zuordnungsverfahrens könnte man bei einem Signal mit einer bestimmten Kennung zunächst einmal auf allen N Antennenkanälen das Signal zum Empfänger durchlassen, um die maximale Signalintensität zu ermitteln. Bei den folgenden Übermittlungen des Signals mit derselben Kennung kann man dann der Reihe nach jeweils einen der Antennenkanäle ausblenden, um zu ermitteln, das Ausblenden von welcher Empfangsantenne den größten Intensitätsverlust zur Folge hat. Zuverlässiger ist das Zuordnungsverfahren jedoch dann, wenn man vor und nach jedem Empfang eines Signals mit einem ausgeblendeten Antennenkanal jeweils einen Signalempfang ohne Ausblenden eines Antennenkanals verarbeitet und die Intensität des bei ausgeblendetem Antennenkanal verarbeiteten Signals vergleicht mit dem Mittelwert der Intensitäten der unmittelbar davor und danach ohne Ausblendung eines Antennenkanals empfangenen Signale. Von der Raddrehung verursachte Schwankungen der Signalintensität können so wenigstens teilweise ausgeglichen werden.
Führt ein Zyklus, in dessen Verlauf jeder Antennenkanal einmal ausgeblendet worden ist, nicht zu einem eindeutigen Ergebnis, wird der Zyklus wiederholt. Es kann aber auch zweckmäßig sein, von vornherein mehrere Zyklen auszuwerten, um die Zuordnungssicherheit zu erhöhen.

Eine Schaltungsanordnung zur Durchführung des erfindungsgemäßen Verfahrens ist Gegenstand des Anspruchs 7 und der auf ihn zurückbezogenen Unteransprüche. Die Schaltungsanordnung wird anhand der beigefügten Zeichnung nachstehend beschrieben.
- Figur 1: zeigt ein Blockschaltbild der Schaltungsanordnung, und
- Figur 2: zeigt schematisch eine im Verlauf des erfindungsgemäßen Verfahrens auftretende Signalfolge.

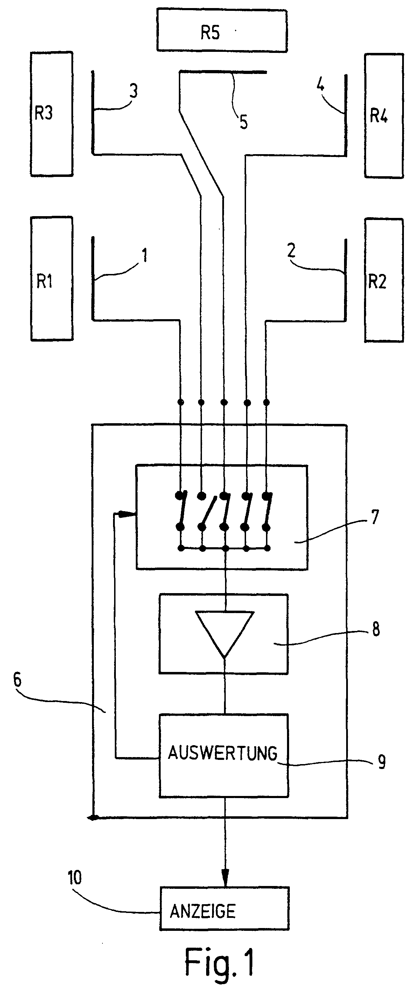

Figur 1 zeigt fünf Räder R1, R2, R3, R4 und R5 eines Fahrzeuges, von denen R5 ein Reserverad ist. Dem Rad R1 ist eine Empfangsantenne 1, dem Rad R2 eine Empfangsantenne 2, dem Rad R3 eine Empfangsantenne 3, dem Rad R4 eine Empfangsantenne 4 und dem Rad R5 eine Empfangsantenne 5 zugeordnet. Die Empfangsantennen befinden sich an der Karosserie, vorzugsweise in den Radkästen. Von den Empfangsantennen 1 bis 5 führen fünf koaxiale Leitungen zu einem zentralen Steuergerät 6, welches in der Karosserie, z.B. hinter dem Armaturenbrett, angeordnet ist und einen Multiplexer 7, einen Empfänger 8 und eine Auswerteschaltung 9 enthält, welche ihrerseits mit einer Anzeigeeinheit 10 verbunden ist, bei welcher es sich um eine oder mehrere Signallampen oder ein LCD-Anzeigefeld handeln kann.

Der Multiplexer 7 ist so aufgebaut, daß er die von den Antennen 1 bis 5 kommenden Leitungen einzeln unterbrechen kann. Im gezeichneten Beispiel ist die von der Empfangsantenne 3 kommende Leitung unterbrochen.

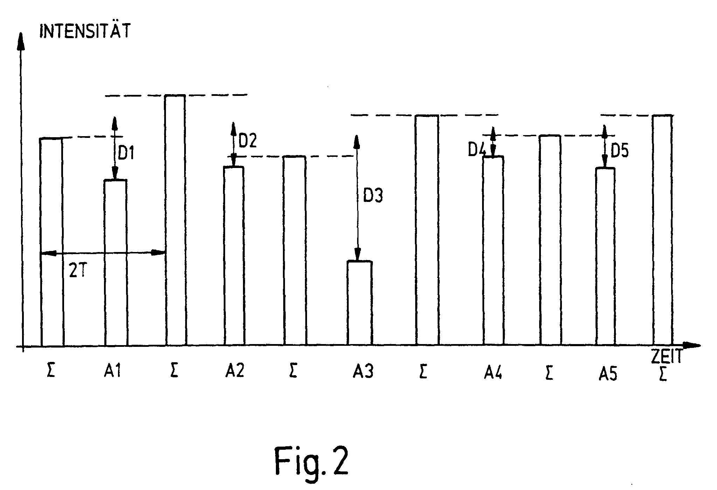

Damit ist eine Arbeitsweise möglich, wie sie z.B. in Figur 2 dargestellt ist: In regelmäßigen Zeitabständen 2T wird das Signal, welches von einer Radelektronik mit der Periode T gesendet wird, von allen N=5 Antennen empfangen und vom Multiplexer 7 auf allen fünf Kanälen zum Empfänger 8 durchgelassen. Der Empfänger 8 empfängt deshalb in Zeitabständen 2T ein von allen Antennen 1 bis 5 gemeinsam geliefertes Summensignal Σ mit maximaler Intensität. Dazwischen, bei jedem zweiten von der Radelektronik gesendeten Signal, wird vom Multiplexer 7 jedoch einer der Antennenkanäle unterbrochen und damit der von der zugehörigen Empfangsantenne kommende Signalanteil ausgeblendet, wodurch ein Intensitätsverlust D auftritt. Die Signale mit der auf diese Weise verminderten Intensität sind in Figur 2 mit A1 bis A5 bezeichnet, wobei im Falle A1 das Signal der Antenne 1, im Falle A2 das Signal der Antenne 2, im Falle A3 das Signal der Antenne 3, im Falle A4 das Signal der Antenne 4 und im Falle A5 das Signal der Antenne 5 ausgeblendet worden ist.

Die Auswerteschaltung stellt nun den Intensitätsverlust fest, den das Ausblenden eines Antennensignals zur Folge hat. Da die Signalintensität des Summensignals Σ infolge der sich laufend verändernden Radposition schwankt, wird zur Ermittlung des Intensitätsverlustes infolge des Ausblendens eines Antennenkanals als Bezugsgröße der Mittelwert der Intensitäten der Summensignale Σ unmittelbar vor und nach dem Ausblenden des betreffenden Antennensignals gebildet. Auf diese Weise werden in der Auswerteschaltung 9 die Intensitätsverluste D1, D2, D3, D4 und D5 ermittelt, deren Größe in Figur 2 durch die Länge der jeweiligen Doppelpfeile dargestellt ist. Der mit Abstand größte Intensitätsverlust tritt auf beim Ausblenden des Signals, welches von der Antenne 3 herkommt. Das untersuchte Signal mit der ausgewählten Kennung wird deshalb dem Rad R3 bzw. dessen Radelektronik zugeordnet.

Bei den Signalen mit den anderen vier Kennungen, welche von den restlichen vier Rädern R1, R2, R4 und R5 kommen, wird entsprechend verfahren.

Damit durch das Umschalten des Multiplexers 7 kein Datenverlust eintritt, sind die Schaltzeitpunkte mit der fallenden Signalflanke eines Datenausgangs der Auswerteschaltung 9 synchronisiert.

Die Signale sind in Figur 2 vereinfacht in Rechteckform dargestellt; tatsächlich bestehen sie wie eingangs erläutert, üblicherweise aus einer Präambel, einer Kennung (Identifikationsnummer), den Meßdaten und der Postambel, welche zusammengenommen ein Datentelegramm bilden.

## Patentansprüche

1. Verfahren zum Verarbeiten von Signalen eines Reifendrucküberwachungssystems an Fahrzeugen, an deren N Rädern (R1 bis R5) jeweils ein Sender angebracht und jedem Sender in seiner Nähe eine Empfangsantenne (1 bis 5) zugeordnet ist, welche mit dem Eingang eines gemeinsamen Empfängers (8) verbunden ist, wobei die Sender in zeitlichen Abständen Datentelegramme senden, die eine individuelle Kennung und dieser folgend einen Datenteil enthalten,
**dadurch gekennzeichnet**, daß die von den Empfangsantennen (1 bis 5) gleichzeitig empfangenen, dieselbe Kennung aufweisenden Signale dem Empfänger (8) summiert zugeführt werden, und zwar abwechselnd von allen N Empfangsantennen (1 bis 5) und von N-1 Empfangsantennen (1,2,4,5) in der Weise, daß die eine Empfangsantenne (3), deren Signal aus der Summe der Signale ausgeblendet ist, aus der Gesamtzahl N der Empfangsantennen (1 bis 5) durch zyklische Vertauschung ausgewählt wird,
daß die Intensität der Summensignale bestimmt, die Intensität der Summen aus jeweils N-1 Signalen mit der Intensität der Summe aus N Signalen verglichen und ermittelt wird, von welcher Empfangsantenne (3) das Signal gekommen ist, dessen Ausblendung aus der Signalsumme den größten Intensitätsverlust (D1 bis D5) hervorruft,
und daß das die betreffende individuelle Kennung aufweisende Signal dieser Empfangsantenne (3) und dem ihr zugeordneten Rad (R3) zugeordnet wird.

2. Verfahren nach Anspruch 1, **dadurch gekennzeichnet**, daß die Intensität der vollständigen Signale bestimmt wird, solange trotz des Ausblendens des von einer Empfangsantenne (3) kommenden Signals das Summensignal so stark bleibt, daß mit dem Summensignal der verbleibenden N-1 Empfangsantennen(1,2,4,5) die für den gewählten Empfänger (8) erforderliche Eingangsfeldstärke noch erreicht wird.

3. Verfahren nach Anspruch 1 oder 2, **dadurch gekennzeichnet**, daß die Signale, welche in zyklischer Vertauschung ausgeblendet werden, erst nach dem Empfang der Kennung ausgeblendet werden und demgemäß die Intensitäten der Summensignale nur von dem danach folgenden Rest der Signale bestimmt werden.

4. Verfahren nach einem der vorstehenden Ansprüche, **dadurch gekennzeichnet**, daß die Intensität der Summe aus N-1 Signalen mit dem Mittelwert der Intensitäten der Summe der Gruppe der voraufgehenden N Signale und der Gruppe der nachfolgenden N Signale verglichen wird.

5. Verfahren nach einem der vorstehenden Ansprüche, **dadurch gekennzeichnet,** daß die Sender ihre Datentelegramme mit einer Periode T_{S} senden und daß der Zyklus des Ausblendens eines Signals aus der Summe der gleichzeitig auftretenden Signale mit einer Periode T_{E} wiederholt wird, die groß ist gegen die Periode T_{S}.

6. Verfahren nach einem der vorstehenden Ansprüche, **dadurch gekennzeichnet**,daß ein Signal mit einer bestimmten Kennung nur dann einem bestimmten Rad (R3) zugeordnet wird, wenn der größte Intensitätsunterschied D3 einen Mindestwert überschreitet.

7. Schaltungsanordnung zum Durchführen des Verfahrens nach einem der vorstehenden Ansprüche in einem System zur Reifendrucküberwachung an Fahrzeugen mit
an den Rädern (R1 bis R5) angebrachten Radelektroniken mit jeweils einem Drucksensor, einer Schaltung zur Verarbeitung des von diesem gelieferten Druckmeßwertes, einer Batterie und einem Sender,
in der Nähe der Räder (R1 bis R5) an der Karosserie angebrachten N Empfangsantennen (1 bis 5),
und mit einem in der Karosserie angeordneten Steuergerät (6), mit welchem alle Empfangsantennen (1 bis 5) verbunden sind,
**dadurch gekennzeichnet**, daß das Steuergerät (6) eine Kombination aus einem Empfänger (8) und einem ihm vorgeschalteten Multiplexer (7) enthält, welcher für jede der N Empfangantennen (1 bis 5) einen eigenen Eingang hat und in welchem die N Eingänge einzeln abschaltbar und auf einen gemeinsamen Eingang des Empfängers (8) geschaltet sind.

8. Schaltungsanordnung nach Anspruch 7, **dadurch gekennzeichnet**, daß die Eingänge des Multiplexers (7) zyklisch abschaltbar sind.

9. Schaltungsanordnung nach Anspruch 7 oder 8, **dadurch gekennzeichnet**, daß abwechselnd ein Eingang und dann kein Eingang des Multiplexers (7) abschaltbar ist.

10. Schaltungsanordnung nach Anspruch 7, 8 oder 9, **dadurch gekennzeichnet,** daß der Empfänger (8) den Multiplexer (7) mit einem von der fallenden Flanke der empfangenen Signale abgeleiteten Impuls triggert.

## Claims

1. A method for processing signals of a tire pressure monitoring system on vehicles on each of whose N wheels (R1 through R5) a transmitter is mounted and a reception antenna (1 through 5) which is connected to the input of a common receiver (8) is allocated to each transmitter in its vicinity, the transmitters transmitting, at time intervals, data telegrams which contain an individual identifier and a data portion following the latter,
wherein the signals received simultaneously from the reception antennas (1 through 5) and having the same identifier are conveyed in summed fashion to the receiver (8), alternately from all N reception antennas (1 through 5) and from N-1 reception antennas (1, 2, 4, 5), such that the one reception antenna (3) whose signal is blanked out of the sum of the signals is selected by cyclical transposition from the total number N of reception antennas (1 through 5);
the intensity of the summed signals is determined, the intensity of the sums of N-1 signals is compared in each case to the intensity of the sum of N signals, and an identification is made of that reception antenna (3) from which the signal has come whose blanking from the signal sum brings about the greatest intensity loss (D1 through D5); and
the signal having the relevant individual identifier is allocated to that reception antenna (3) and to the wheel (R3) allocated to it.

2. The method as defined in Claim 1, wherein the intensity of the complete signals is determined as long as the summed signal remains strong enough, despite the blanking of the signal coming from a reception antenna (3), that the input field strength necessary for the selected receiver (8) is still attained with the summed signal of the remaining N-1 reception antennas (1, 2, 4, 5).

3. The method as defined in Claim 1 or 2, wherein the signals which are blanked out in cyclical interchange are blanked out only after the identifier has been received, and the intensities of the summed signals are accordingly determined only from the remaining signal portion which follows thereafter.

4. The method as defined in one of the foregoing claims, wherein the intensity of the sum of N-1 signals is compared to the mean of the intensities of the sum of the group of the previous N signals and of the group of the subsequent N signals.

5. The method as defined in one of the foregoing claims, wherein the transmitters send their data telegrams with a period T_{S}; and the cycle of blanking one signal out from the sum of the simultaneously occurring signals is repeated with a period T_{E} which is large by comparison with the period T_{S}.

6. The method as defined in one of the foregoing claims, wherein a signal with a specific identifier is allocated to a specific wheel (R3) only if the greatest intensity difference (D3) exceeds a minimum value.

7. A circuit arrangement for carrying out the method as defined in one of the foregoing claims in a system for tire pressure monitoring on vehicles, having
wheel electronic packages, mounted on the wheels (R1 through R5), each with a pressure sensor, a circuit for processing the pressure reading supplied thereby, a battery, and a transmitter;
N reception antennas (1 through 5) mounted on the body in the vicinity of the wheels (R1 through R5); and
a control device (6), mounted in the body, to which all the reception antennas (1 through 5) are connected,
wherein the control device (6) contains a combination of a receiver (8) and a multiplexer (7), upstream therefrom, which has a separate input for each of the N reception antennas (1 through 5) and in which the N inputs can be deactivated individually and switched to a common input of the receiver (8).

8. The circuit arrangement as defined in Claim 7, wherein the inputs of the multiplexer (7) can be deactivated cyclically

9. The circuit arrangement as defined in Claim 7 or 8, wherein alternately one input and then no input of the multiplexer (7) can be deactivated.

10. The circuit arrangement as defined in Claim 7, 8, or 9, wherein the receiver (8) triggers the multiplexer (7) with a pulse derived from the trailing edge of the received signals

## Revendications

1. Procédé pour traiter des signaux d'un système de surveillance de la pression de bandages pneumatiques sur des véhicules sur les N roues (R1 à R5) desquels on applique respectivement un émetteur et on attribue à chaque émetteur, à sa proximité, une antenne de réception (1 à 5) qui est reliée à l'entrée d'un récepteur commun (8), dans lequel les émetteurs émettent des télégrammes de données, par intervalles dans le temps, qui contiennent une identification individuelle et, correspondant à cette dernière, une partie de donnée, caractérisé en ce que les signaux présentant la même identification, reçus de manière simultanée par les antennes de réception (1 à 5) sont acheminés sous forme additionnée au récepteur (8) et, à vrai dire, en alternance à partir de toutes les N antennes (1 à 5) de réception et à partir de N-1 antennes de réception (1, 2, 4, 5), de telle sorte que la première antenne de réception (3), dont le signal est supprimé de la somme des signaux, est sélectionnée à partir du nombre total N des antennes de réception (1 à 5) par permutation cyclique, en ce que l'intensité des signaux cumulés détermine, l'intensité des sommes de respectivement N-1 signaux étant comparée avec l'intensité de la somme de N signaux et étant calculée, de quelle antenne de réception (3) provient le signal dont la suppression de la somme de signaux déclenche la perte d'intensité la plus élevée (D1 à D5), et en ce que le signal présentant l'identité individuelle correspondante est attribué à cette antenne de réception (3) et à la roue (R3) correspondante.

2. Procédé selon la revendication 1, caractérisé en ce qu'on détermine l'intensité de signaux complets aussi longtemps que, malgré la suppression du signal provenant d'une antenne de réception (3), le signal cumulé reste à ce point intense qu'avec le signal cumulé des N-1 antennes de réception restantes (1, 2, 4, 5), on atteint encore l'intensité de champ d'entrée requise pour le récepteur (8) sélectionné.

3. Procédé selon la revendication 1 ou 2, caractérisé en ce qu'on supprime les signaux, la suppression étant réalisée en procédant à une permutation cyclique, seulement après la réception de l'identification et, en conséquence, on détermine les intensités des signaux cumulés uniquement du reste des signaux qui suivent directement.

4. Procédé selon l'une quelconque des revendications précédentes, caractérisé en ce qu'on compare l'intensité de la somme de N-1 signaux avec la valeur moyenne des intensités de la somme du groupe des N signaux précédents et du groupe des N signaux suivants.

5. Procédé selon l'une quelconque des revendications précédentes, caractérisé en ce que les émetteurs émettent leurs télégrammes de données avec une période Tₛ et en ce qu'on répète le cycle de suppression d'un signal de la somme des signaux apparaissant de manière simultanée, avec une période Tₑ qui est grande par rapport à la période Tₛ.

6. Procédé selon l'une quelconque des revendications précédentes, caractérisé en ce que l'on n'attribue un signal possédant une identification déterminée à une roue déterminée (R3) que lorsque la différence d'intensité maximale D3 dépasse une valeur minimale.

7. Agencement de circuit pour la mise en oeuvre du procédé selon l'une quelconque des revendications précédentes dans un système pour la surveillance de la pression de bandages pneumatiques sur des véhicules comprenant des électroniques pour des roues appliquées sur les roues (R1 à R5), comprenant respectivement un capteur de pression, un circuit pour le traitement de la valeur de mesure de pression fournie par le premier cité, une batterie et un émetteur, N antennes de réception (1 à 5) appliquées sur la carrosserie à proximité des roues (R1 à R5), et un appareil de commande (6) qui est disposé dans la carrosserie et auquel sont reliées toutes les antennes de réception (1 à 5), caractérisé en ce que l'appareil de commande (6) contient une combinaison constituée par un récepteur (8) et par un multiplexeur (7) monté en amont qui possède une entrée propre pour chacune des N antennes de réception (1 à 5) et dans lequel les N entrées peuvent être mises individuellement hors circuit et sont raccordées à une entrée commune du récepteur (8).

8. Agencement de circuit selon la revendication 7, caractérisé en ce que les entrées du multiplexeur (7) peuvent être mises hors circuit de manière cyclique.

9. L'agencement de circuit selon la revendication 7 ou 8, caractérisé en ce que, en alternance, une entrée, puis aucune entrée du multiplexeur (7) peuvent être mises hors circuit.

10. Agencement de circuit selon la revendication 7, 8 ou 9, caractérisé en ce que le récepteur (8) déclenche le multiplexeur (7) avec une impulsion dérivant du flanc descendant des signaux reçus.
